(19) Europäisches Patentamt
European Patent Office
Office européen des brevets

(11) **EP 4 550 458 A1**

(12) **EUROPEAN PATENT APPLICATION**
published in accordance with Art. 153(4) EPC

(43) Date of publication:
**07.05.2025  Bulletin 2025/19**

(21) Application number: **22953524.0**

(22) Date of filing: **03.08.2022**

(51) International Patent Classification (IPC):
**H01M 4/525** (2010.01)    **H01M 4/36** (2006.01)
**H01M 10/0525** (2010.01)

(52) Cooperative Patent Classification (CPC):
**H01M 4/36; H01M 4/525; H01M 10/0525**

(86) International application number:
**PCT/CN2022/109897**

(87) International publication number:
**WO 2024/026713 (08.02.2024 Gazette 2024/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Easpring Material Technology
Co., Ltd.
Beijing 100160 (CN)**

(72) Inventors:
• **ZHANG, Xuequan
  Beijing 100160 (CN)**
• **WANG, Jingpeng
  Beijing 100160 (CN)**
• **CHEN, Yanbin
  Beijing 100160 (CN)**
• **LIU, Yafei
  Beijing 100160 (CN)**

(74) Representative: **Maikowski & Ninnemann
Patentanwälte Partnerschaft mbB
Postfach 15 09 20
10671 Berlin (DE)**

(54) **POSITIVE ELECTRODE ACTIVE MATERIAL FOR LITHIUM SECONDARY BATTERY AND PREPARATION METHOD THEREFOR**

(57)    The present invention relates to a cathode active material, a method for preparing the same and a lithium secondary battery comprising the cathode active material. The cathode active material comprises agglomerated particles represented by Formula $Li_{1+a1}Ni_{x1}Co_{y1}M_{z1}M'_{1-x1-y1-z1}O_2$ and single crystal particles represented by Formula $Li_{1+a2}Ni_{x2}Co_{y2}M_{z2}M'_{1-x2-y2-z2}O_2$, wherein M is one or two elements selected from Mn and Al, M' is one or more elements selected from B, F, Mg, Si, P, Ca, Ti, V, Cr, Fe, Ga, Sr, Y, Zr, Nb, Mo, Sn, Ba, La, Ce, and W, $-0.03 \leq a1 \leq 0.20$, $0.30 \leq x1 \leq 0.99$, $0 \leq y1 \leq 0.30$, $0 \leq z1 \leq 0.30$, $0 \leq 1-x1-y1-z1 \leq 0.10$, $-0.03 \leq a2 \leq 0.20$, $0.31 \leq x2 \leq 1.00$, $0 \leq y2 \leq 0.30$, $0 \leq z2 \leq 0.30$, $0 \leq 1-x2-y2-z2 \leq 0.10$, with the proviso that: $0 < x2-x1 \leq 0.5$.

**Fig. 3**

Regulus 1.0kV 9.1mm x1.00k SE(U)    50.0μm

EP 4 550 458 A1

**Description**

**TECHNICAL FIELD**

The present invention relates to a cathode (positive electrode) active material, a method for preparing the same and a lithium secondary battery comprising the cathode active material.

**BACKGROUND ART**

In recent years, with the deterioration of the energy and environment crisis, natural energy sources such as wind power and solar power have been vigorously developed. However, these energy sources have low efficiency, and are unable to make up for the shortage of the energy resources usage on a large scale. Lithium-ion batteries are green secondary batteries having prominent advantages such as high operational voltage, high energy density, good cycle life, low self-discharge, and no memory effect, and have been rapidly developed.

In the field of lithium-ion batteries, ternary layered materials (Nickel-Cobalt-Manganese, NCMs) have great potential for development due to their high specific capacity and stability. However, the stability of the material decreases gradually with the increase of the nickel content in NCMs. The reaction between the highly active $Ni^{4+}$ produced during the charging process and the electrolyte will generate a NiO-like rock-salt phase, which seriously damages the structure of the layered material, causes the collapse of the cathode structure, and in turn induces the dissolution of transition metal ions, phase transformation and lattice oxygen precipitation. At present, the "secondary particles" of conventional agglomerated NCMs typically consist of many nanoscaled "primary particles". During the charging and discharging process, the change in lattice parameters will lead to the formation of microcracks in the secondary particles. The microcracks formed will expose fresh interface inside the secondary particles, and further accelerate the degradation of the properties. It is noted that the higher the nickel content is, the more obvious the destructive effect of the cracks is. In summary, the main reason for the decrease in the cycle life of NCMs, especially high-nickel NCMs, is microcracks, which will simultaneously reduce the thermal stability, structural stability and cycle stability of the cathode material.

At present, in order to minimize the generation of microcracks in high-nickel agglomerated materials, in most studies, technologies such as coating and doping are applied to improve the strength of large particles. However, during the preparation of the batteries, it is very difficult to increase the compaction density. At the same nickel content, the capacity of small agglomerated particles is higher than that of large particles, but the properties such as the cycle life and gas production are reduced. The morphology of small single crystal particles is different from that of small agglomerated particles, and the particle strength thereof is relatively high. However, the properties such as capacity and gas production can hardly reach the desired level, and there are also major problems in screening and pulping.

Patent CN 109962221 B uses single crystal-like materials doped with agglomerate, the main ingredients of which are lithium manganese iron phosphate materials in a single crystal form and a multiple-element material in an agglomerated form. The multiple-element material and the lithium manganese iron phosphate belong to two different cathode materials with different test voltages and use ranges. Therefore, forcibly mixing the two materials together will inevitably sacrifice their respective advantages and cause waste of resources. As disclosed in Patent No. CN 107154491 B, two materials with different conductivities are mixed together, although the capacities of the two materials are considered respectively, the effect of the Ni content of the two different materials on the final product is not taken into account. Since the two materials are mixed together, the claimed range for the particle size is also relatively wide and the effect on the final product can hardly be determined.

**SUMMARY OF THE INVENTION**

An object of the present invention is to overcome the shortcomings in the prior art and effectively enhance the deficiencies of the blended product such as low capacity and poor cycle life. The present invention effectively improves the capacity of the cathode active material by rendering the Ni content in small particles higher than the Ni content in large particles. In addition, by preparing large agglomerated particles and small single crystal particles and controlling their different surface characteristics, the generation of microcracks in the large agglomerated particles can be effectively inhibited, so as to improve the stability of the cathode active material during long-term cycles. The cathode active material provided by the present invention has properties such as high compaction density, high capacity and high stability.

In one aspect, the present invention provides a cathode active material for lithium secondary battery, wherein the cathode active material comprises agglomerated particles represented by Formula A1 and single crystal particles represented by Formula A2

A1: $\qquad Li_{1+a1}Ni_{x1}Co_{y1}M_{z1}M'_{1-x1-y1-z1}O_2$

(continued)

A2: $Li_{1+a2}Ni_{x2}Co_{y2}M_{z2}M'_{1-x2-y2-z2}O_2$

wherein

M is one or two elements selected from Mn and Al,
M' is one or more elements selected from B, F, Mg, Si, P, Ca, Ti, V, Cr, Fe, Ga, Sr, Y, Zr, Nb, Mo, Sn, Ba, La, Ce, and W,
$-0.03 \leq a1 \leq 0.20$, $0.30 \leq x1 \leq 0.99$, $0 \leq y1 \leq 0.30$, $0 \leq z1 \leq 0.30$, $0 \leq 1-x1-y1-z1 \leq 0.10$,
$-0.03 \leq a2 \leq 0.20$, $0.31 \leq x2 \leq 1.00$, $0 \leq y2 \leq 0.30$, $0 \leq z2 \leq 0.30$, $0 \leq 1-x2-y2-z2 \leq 0.10$,
with the proviso that: $0 < x2-x1 \leq 0.5$.

In another aspect, the present invention also provides a method for preparing a cathode active material, including the steps of:

i) preparing an agglomerated particle precursor represented by Formula A3 and a single crystal particle precursor represented by Formula A4 separately by a liquid-phase co-precipitation process

A3: $Ni_{x1}Co_{y1}M_{z1}M'_{1-x1-y1-z1}(OH)_2$
A4: $Ni_{x2}Co_{y2}M_{z2}M'_{1-x2-y2-z2}(OH)_2$

wherein

M is one or two elements selected from Mn and Al,
M' is one or more elements selected from B, F, Mg, Si, P, Ca, Ti, V, Cr, Fe, Ga, Sr, Y, Zr, Nb, Mo, Sn, Ba, La, Ce, and W,

$$-0.03 \leq a1 \leq 0.20, 0.30 \leq x1 \leq 0.99, 0 \leq y1 \leq 0.30, 0 \leq z1 \leq 0.30, 0 \leq 1\text{-}x1\text{-}y1\text{-}z1 \leq 0.10,$$

$$-0.03 \leq a2 \leq 0.20, 0.31 \leq x2 \leq 1.00, 0 \leq y2 \leq 0.30, 0 \leq z2 \leq 0.30, 0 \leq 1\text{-}x2\text{-}y2\text{-}z2 \leq 0.10,$$

$$0.30 \leq x1 \leq 0.99, 0 \leq y1 \leq 0.30, 0 \leq z1 \leq 0.30, 0 \leq 1\text{-}x1\text{-}y1\text{-}z1 \leq 0.10,$$

$$0.31 \leq x2 \leq 1.00, 0 \leq y2 \leq 0.30, 0 \leq z2 \leq 0.30, 0 \leq 1\text{-}x2\text{-}y2\text{-}z2 \leq 0.10,$$

with the proviso that: $0 < x2-x1 \leq 0.5$;

ii) mixing a lithium source with the agglomerated particle precursor at a molar ratio of r1, and optionally incorporating M' as a doping element, wherein $0.97 \leq r1 \leq 1.20$; then performing a primary sintering at the sintering temperature T1 in a sintering atmosphere of air or oxygen, wherein $600°C \leq T1 \leq 1000°C$; and then obtaining agglomerated particles via crushing;
iii) mixing a lithium source with the single crystal particle precursor at a molar ratio of r2, and optionally incorporating M' as a doping element, wherein $0.97 \leq r2 \leq 1.20$; then performing a primary sintering at the sintering temperature T2 in a sintering atmosphere of air or oxygen, wherein $650°C \leq T2 \leq 1050°C$; and then obtaining single crystal particles via crushing; and
iv) blending the agglomerated particles of Step ii) with the single crystal particles of Step iii) to obtain the cathode active material.

In still another aspect, the present invention also provides a lithium secondary battery comprising the cathode active material according to the present invention or the cathode active material prepared by the preparation method according to the present invention.

**BRIEF DESCRIPTION OF THE DRAWINGS**

Figures 1 to 3 show SEM photographs for the large agglomerated particles A1 and the small single crystal particles A2 in Example 1 as well as the SEM photograph for the blend of the above two particles, respectively;

Figure 4 shows the charge-discharge curves of Example 1, Comparative Example 1, and Comparative Example 2;

and

Figure 5 shows the cycle life of Example 1, Comparative Example 1, and Comparative Example 2.

## DETAILED DESCRIPTION

Unless otherwise indicated, all publications, patent applications, patents, and other references mentioned herein are expressly incorporated by reference in their entirety for all purposes as if they are fully set forth.

Unless otherwise defined, all technical and scientific terms used herein have the same meaning as commonly understood by those ordinary skilled in the art to which the present invention belongs. In the event of a conflict, the present description, including definitions, shall prevail.

If quantities, concentrations, or other values or parameters are given as a range, a preferred range, or a series of preferred upper limit and preferred lower limits, it should be understood that all ranges formed by combination of the upper limit or a preferred value of/in any range with the lower limit or preferred value or a preferred value of/in the range are specifically disclosed, regardless whether these ranges are separately disclosed or not. When a numerical range is mentioned, unless otherwise indicated, the range includes its endpoints and all integers and fractions within the range.

In one aspect, the present invention provides a cathode active material for lithium secondary battery, wherein the cathode active material comprises agglomerated particles represented by Formula A1 and single crystal particles represented by Formula A2

$$A1: \quad Li_{1+a1}Ni_{x1}Co_{y1}M_{z1}M'_{1-x1-y1-z1}O_2$$
$$A2: \quad Li_{1+a2}Ni_{x2}Co_{y2}M_{z2}M'_{1-x2-y2-z2}O_2$$

wherein

M is one or two elements selected from Mn and Al,

M' is one or more elements selected from B, F, Mg, Si, P, Ca, Ti, V, Cr, Fe, Ga, Sr, Y, Zr, Nb, Mo, Sn, Ba, La, Ce, and W,

$-0.03 \leq a1 \leq 0.20$, preferably $-0.01 \leq a1 \leq 0.14$, more preferably $0 \leq a1 \leq 0.10$, and particularly preferably $0.01 \leq a1 \leq 0.08$,

$0.30 \leq x1 \leq 0.99$, preferably $0.57 \leq x1 \leq 0.99$, more preferably $0.72 \leq x1 \leq 0.99$, and particularly preferably $0.80 \leq x1 \leq 0.99$,

$0 < y1 \leq 0.30$, preferably $0 \leq y1 \leq 0.21$, more preferably $0 \leq y1 \leq 0.15$, and particularly preferably $0 < y1 \leq 0.10$,

$0 \leq z1 \leq 0.30$, preferably $0 \leq z1 \leq 0.18$, more preferably $0 \leq z1 \leq 0.11$, and particularly preferably $0 \leq z1 \leq 0.06$,

$0 \leq 1-x1-y1-z1 \leq 0.10$, preferably $0 \leq 1-x1-y1-z1 \leq 0.08$, more preferably $0 \leq 1-x1-y1-z1 \leq 0.05$, and particularly preferably $0 \leq 1-x1-y1-z1 \leq 0.03$,

$-0.03 \leq a2 \leq 0.20$, preferably $-0.02 \leq a2 \leq 0.16$, more preferably $-0.01 \leq a2 \leq 0.14$, and particularly preferably $0 \leq a2 \leq 0.08$,

$0.31 \leq x2 \leq 1.00$, preferably $0.59 \leq x2 \leq 0.995$, more preferably $0.75 \leq x2 \leq 0.995$, and particularly preferably $0.81 \leq x2 \leq 0.995$,

$0 \leq y2 \leq 0.30$, preferably $0 \leq y2 \leq 0.21$, more preferably $0 \leq y2 \leq 0.15$, and particularly preferably $0 \leq y2 \leq 0.10$,

$0 \leq z2 \leq 0.30$, preferably $0 \leq z2 \leq 0.18$, more preferably $0 \leq z2 \leq 0.11$, and particularly preferably $0 \leq z2 \leq 0.08$,

$0 \leq 1-x2-y2-z2 \leq 0.10$, preferably $0 \leq 1-x2-y2-z2 \leq 0.08$, more preferably $0 \leq 1-x2-y2-z2 \leq 0.05$, and particularly preferably $0 \leq 1-x2-y2-z2 \leq 0.03$,

with the proviso that: $0 < x2-x1 \leq 0.5$, preferably $0.01 \leq x2-x1 \leq 0.27$, more preferably $0.01 \leq x2-x1 \leq 0.2$, further preferably $0.015 \leq x2-x1 \leq 0.20$, and particularly preferably $0.02 \leq x2-x1 \leq 0.15$.

According to one embodiment of the cathode active material of the present invention, $a2 > a1$, preferably $0.01 \leq a2-a1 \leq 0.20$, more preferably $0.01 \leq a2-a1 \leq 0.12$, and particularly preferably $0.01 \leq a2-a1 \leq 0.07$, especially preferably $0.01 \leq a2-a1 \leq 0.04$.

According to another embodiment of the cathode active material of the present invention, the agglomerated particles have a particle size $D_{50}$ of 6 to 30 $\mu$m, preferably 8 to 25 $\mu$m, more preferably 9 to 20 $\mu$m, and particularly preferably 10 to 18 $\mu$m.

According to another embodiment of the cathode active material of the present invention, the single crystal particles have a particle size $D_{50}$ of 0.1 to 10 $\mu$m, preferably 0.5 to 8.0 $\mu$m, more preferably 1.0 to 6.0 $\mu$m, and particularly preferably 1.5 to 4.5 $\mu$m.

According to another embodiment of the cathode active material of the present invention, the agglomerated particles are present in an amount of 20 to 90%, preferably 45 to 85%, more preferably 50 to 80 %, and particularly preferably 60 to 80%, the single crystal particles are present in an amount of 10 to 80%, preferably 10 to 70 %, more preferably 15 to 60 %, and particularly preferably 20 to 40 %, based on the weight of the cathode active material.

According to another embodiment of the cathode active material of the present invention, the agglomerated particles have a coating layer containing at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, wherein the coating element is present in an amount of 0.1 to 2 mol%, and preferably about 1 mol%, based on the agglomerated particles; and/or, the single crystal particles have a coating layer containing at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, wherein the coating element is present in an amount of 0.1 to 2 mol%, and preferably about 1 mol%, based on the single crystal particles; with the proviso that: the coating element contained in the coating layer of the agglomerated particles is different from the coating element contained in the coating layer of the single crystal particles.

According to another embodiment of the cathode active material of the present invention, the cathode active material has specific surface areas $BET_{before}$ and $BET_{after}$ before and after sintering at 600°C in an air atmosphere for 8 hours, which satisfy: preferably,

$$|BET_{after} - BET_{before}| / BET_{before} \leq 50\%,$$

$$|BET_{after} - BET_{before}| / BET_{before} \leq 30\%.$$

The present invention uses single crystal particles with rounded surfaces and agglomerated particles with high particle strength, in combination with an optimal blending ratio, the controlled finished material exhibits a stable crystal structure, thereby reducing the change in surface porosity of the finished product during further sintering.

According to another embodiment of the cathode active material of the present invention, the agglomerated particles have specific surface areas $BET_{before}$ and $BET_{after}$ before and after sintering at 600°C in an air atmosphere for 8 hours, which satisfy: preferably,

$$(BET_{after} - BET_{before}) / BET_{before} \geq 15\%,$$

$$40\% \geq (BET_{after} - BET_{before}) / BET_{before} \geq 20\%.$$

Agglomerated particles consist of many nanoscaled particles. In order to maintain good cycle performance, the surface of the nanoparticles should not have excessive voids, and the BET of the material is required to be controlled within a certain range. Under normal circumstances, after sintering at a high temperature, the BET of the material will further decrease. However, by controlling the crystallinity and orientation of the nano-grains on the surface of the material, in combination with in-situ melting surface treatment, a good surface /interface protection effect can be achieved according to the present invention. Moreover, it is unexpectedly found that the BET of the material surface does not decrease, but increases. The inventors further found that after the agglomerated particles with such surface BET property are blended with single crystal particles, the cathode material exhibits relatively excellent compression-resistant property, better discharge capacity and cycle performance.

According to another embodiment of the cathode active material of the present invention, the single crystal particles have specific surface areas $BET_{before}$ and $BET_{after}$ before and after sintering at 600°C in an air atmosphere for 8 hours, which satisfy: preferably,

$$(BET_{before} - BET_{after}) / BET_{before} \leq 15\%,$$

$$0 \leq (BET_{before} - BET_{after}) / BET_{before} \leq 10\%.$$

Since the single crystal particles of the present invention have properties such as good crystallinity and rounded surface, they are relatively stable in structure. During the high-temperature sintering, the material does not collapse or close to a large extent, and has less change in BET as compared with the BET of the un-sintered material.

According to another embodiment of the cathode active material of the present invention, the cathode active material does not comprise nickel-free active materials, such as lithium manganese iron phosphate.

According to another embodiment of the cathode active material of the present invention, the cathode active material consists of the agglomerated particles represented by Formula A1 and the single crystal particles represented by Formula A2.

In another aspect, the present invention further provides a method for preparing a cathode active material, including the steps of:

i) preparing an agglomerated particle precursor represented by Formula A3 and a single crystal particle precursor represented by Formula A4 separately by a liquid-phase co-precipitation process

$$A3: \quad Ni_{x1}Co_{y1}M_{z1}M'_{1-x1-y1-z1}(OH)_2$$
$$A4: \quad Ni_{x2}Co_{y2}M_{z2}M'_{1-x2-y2-z2}(OH)_2$$

wherein

M is one or two elements selected from Mn and Al,

M' is one or more elements selected from B, F, Mg, Si, P, Ca, Ti, V, Cr, Fe, Ga, Sr, Y, Zr, Nb, Mo, Sn, Ba, La, Ce, and W,

$0.30 \leq x1 \leq 0.99$, preferably $0.57 \leq x1 \leq 0.99$, more preferably $0.72 \leq x1 \leq 0.99$, and particularly preferably $0.80 \leq x1 \leq 0.99$,

$0 \leq y1 \leq 0.30$, preferably $0 \leq y1 \leq 0.21$, more preferably $0 \leq y1 \leq 0.15$, and particularly preferably $0 < y1 \leq 0.10$,

$0 \leq z1 \leq 0.30$, preferably $0 \leq z1 \leq 0.18$, more preferably $0 \leq z1 \leq 0.11$, and particularly preferably $0 \leq z1 \leq 0.06$,

$0 \leq 1-x1-y1-z1 \leq 0.10$, preferably $0 \leq 1-x1-y1-z1 \leq 0.08$, more preferably $0 \leq 1-x1-y1-z1 \leq 0.05$, and particularly preferably $0 \leq 1-x1-y1-z1 \leq 0.03$,

$0.31 \leq x2 \leq 1.00$, preferably $0.59 \leq x2 \leq 0.995$, more preferably $0.75 \leq x2 \leq 0.995$, and particularly preferably $0.81 \leq x2 \leq 0.995$,

$0 \leq y2 \leq 0.30$, preferably $0 \leq y2 \leq 0.21$, more preferably $0 \leq y2 \leq 0.15$, and particularly preferably $0 \leq y2 \leq 0.10$,

$0 \leq z2 \leq 0.30$, preferably $0 \leq z2 \leq 0.18$, more preferably $0 \leq z2 \leq 0.11$, and particularly preferably $0 \leq z2 \leq 0.08$,

$0 \leq 1-x2-y2-z2 \leq 0.10$, preferably $0 \leq 1-x2-y2-z2 \leq 0.08$, more preferably $0 \leq 1-x2-y2-z2 \leq 0.05$, and particularly preferably $0 \leq 1-x2-y2-z2 \leq 0.03$,

with the proviso that: $0 < x2-x1 \leq 0.5$, preferably $0.01 \leq x2-x1 \leq 0.27$, more preferably $0.01 \leq x2-x1 \leq 0.20$, further preferably $0.015 \leq x2-x1 \leq 0.20$, and particularly preferably $0.02 \leq x2-x1 \leq 0.15$;

ii) mixing a lithium source with the agglomerated particle precursor at a molar ratio of r1, and optionally incorporating M' as a doping element, wherein $0.97 \leq r1 \leq 1.20$, preferably $0.99 \leq r1 \leq 1.14$, more preferably $1.00 \leq r1 \leq 1.10$, and particularly preferably $1.01 \leq r1 \leq 1.08$; then performing a primary sintering at the sintering temperature T1 in a sintering atmosphere of air or oxygen, preferably oxygen, wherein $600°C \leq T1 \leq 1000°C$, preferably $675°C \leq T1 \leq 875°C$, more preferably $690°C \leq T1 \leq 800°C$, and particularly preferably $690°C \leq T1 \leq 780°C$; and then obtaining agglomerated particles via crushing;

iii) mixing a lithium source with the single crystal particle precursor at a molar ratio of r2, and optionally incorporating M' as a doping element, wherein $0.97 \leq r2 \leq 1.20$, preferably $0.98 \leq r2 \leq 1.16$, more preferably $0.99 \leq r2 \leq 1.14$, and particularly preferably $1.00 \leq r2 \leq 1.08$; then performing a primary sintering at the sintering temperature T2 in a sintering atmosphere of air or oxygen, preferably oxygen, wherein $650°C \leq T2 \leq 1050°C$, preferably $730°C \leq T2 \leq 930°C$, more preferably $750°C \leq T2 \leq 930°C$, and particularly preferably $750°C \leq T2 \leq 900°C$; and then obtaining single crystal particles via crushing; and

iv) blending the agglomerated particles of Step ii) with the single crystal particles of Step iii) to obtain the cathode active material.

According to another embodiment of the method according to the present invention, r2 > r1, preferably $0.01 \leq r2-r1 \leq 0.20$, more preferably $0.01 \leq r2-r1 \leq 0.12$, particularly preferably $0.01 \leq r2-r1 \leq 0.07$, and especially preferably $0.01 \leq r2-r1 \leq 0.04$.

According to another embodiment of the method according to the present invention, the agglomerated particle precursor has a particle size $D_{50}$ of 6.5 to 30.5 $\mu$m, preferably 8.5 to 25.5 $\mu$m, more preferably 9.5 to 20.5 $\mu$m, and particularly preferably 10.5 to 18.5 $\mu$m. The agglomerated particles have a particle size $D_{50}$ of 6 to 30 $\mu$m, preferably 8 to 25 $\mu$m, more preferably 9 to 20 $\mu$m, and particularly preferably 10 to 18 $\mu$m.

According to another embodiment of the method according to the present invention, the single crystal particle precursor has a particle size $D_{50}$ of 0.1 to 30.5 $\mu$m, preferably 1.0 to 17.3 $\mu$m, more preferably 1.0 to 9.3 $\mu$m, and particularly preferably 1.0 to 6.0 $\mu$m. The single crystal particles have a particle size $D_{50}$ of 0.1 to 10 $\mu$m, preferably 0.5 to 8.0 $\mu$m, more preferably 1.0 to 6.0 $\mu$m, and particularly preferably 1.5 to 4.5 $\mu$m.

According to another embodiment of the method according to the present invention, the agglomerated particles are present in an amount of 20 to 90%, preferably 45 to 85 %, more preferably 50 to 80 %, and particularly preferably 60 to 80 %, the single crystal particles are present in an amount of 10 to 80%, preferably 10 to 70 %, more preferably 15 to 60 %, and particularly preferably 20 to 40 %, based on the weight of the cathode active material.

According to another embodiment of the method according to the present invention, prior to Step iv), the agglomerated particles are mixed with a coating precursor comprising at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, and then a secondary sintering is performed at the sintering temperature T3 in a sintering atmosphere of air or oxygen, preferably oxygen, to obtain secondarily sintered agglomerated particles, wherein 250°C ≤ T3 ≤ 800°C, preferably 250°C ≤ T3 ≤ 600°C, more preferably 250°C ≤ T3 ≤ 480°C, and particularly preferably 250°C ≤ T3 ≤ 450°C, wherein the coating element is present in an amount of 0.1 to 2 mol%, preferably about 1 mol%, based on the agglomerated particles; and/or, in addition, the single crystal particles are mixed with a coating precursor comprising at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, and then a secondary sintering is performed at the sintering temperature T4 in a sintering atmosphere of air or oxygen, preferably oxygen, to obtain secondarily sintered single crystal particles, wherein 300°C ≤ T4 ≤ 900°C, preferably 460°C ≤ T4 ≤ 800°C, more preferably 550°C ≤ T4 ≤ 750°C, and particularly preferably 600°C ≤ T4 ≤ 750°C, wherein the coating element is present in an amount of 0.1 to 2 mol%, preferably about 1 mol%, based on the single crystal particles; with the proviso that: the coating element contained in the coating precursor of the agglomerated particles is different from the coating element contained in the coating precursor of the single crystal particles.

In another aspect, the present invention further provides a lithium secondary battery comprising the cathode active material according to the present invention or the cathode active material prepared by the preparation method according to the present invention.

## Examples

### Example 1

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.86}Co_{0.08}Mn_{0.06}(OH)_2$ were separately prepared by a liquid-phase co-precipitation process.

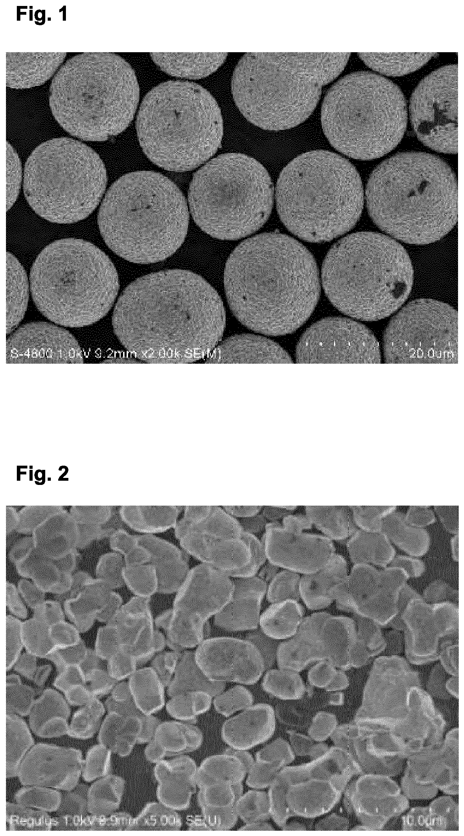

LiOH and $Ni_{0.83}Co_{0.11}Mn_{0.06}(OH)_2$ were mixed at a molar ratio of 1.08. The mixed material was sintered for the first time in an oxygen atmosphere at a sintering temperature of 750°C. The sintered material was crushed, and the crushed material was added with boric acid containing 1 mol% of B, and sintered for the second time at a sintering temperature of 400°C to obtain a large agglomerated particle material with a $D_{50}$ of 10.0 $\mu$m, as shown in Figure 1. The agglomerated material was treated at 600°C for 8 hours, and had a BET increased by a change rate of 35%.

LiOH and $Ni_{0.86}Co_{0.08}Mn_{0.06}(OH)_2$ were mixed at a molar ratio of 1.12. The mixed material was sintered for the first time in an oxygen atmosphere at a sintering temperature of 812°C. The sintered material was crushed, and the crushed material was added with $Al_2O_3$ containing 1 mol% of Al, and sintered for the second time at a sintering temperature of 620°C to obtain a small single crystal particle material with a $D_{50}$ of 3.5 $\mu$m, as shown in Figure 2. The single crystal material was treated at 600°C for 8 hours, and had a BET decreased by a change rate of 2%.

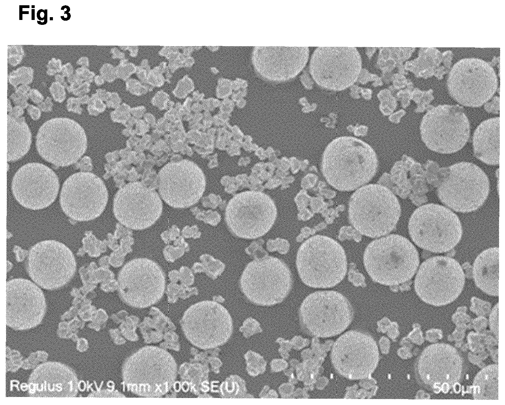

The above-mentioned large agglomerated particles and small single crystal particles were mixed in a mass ratio of 7 : 3 to obtain a cathode active material for lithium secondary battery, as shown in Figure 3. The cathode active material was treated at 600°C for 8 hours, and had a BET increased by a change rate of 24%.

### Example 2

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.86}Co_{0.08}Mn_{0.06}(OH)_2$ were separately prepared by a liquid-phase co-precipitation process.

LiOH and $Ni_{0.83}Co_{0.11}Mn_{0.06}(OH)_2$ were mixed at a molar ratio of 1.06. The mixed material was sintered for the first time in an oxygen atmosphere at a sintering temperature of 745°C. The sintered material was crushed, and the crushed material was added with boric acid containing 0.8 mol% of B, and sintered for the second time at a sintering temperature of 380°C to obtain a large agglomerated particle material with a $D_{50}$ of 10.0 $\mu$m. The agglomerated material was treated at 600°C for 8 hours, and had a BET increased by a change rate of 24%.

LiOH and $Ni_{0.86}Co_{0.08}Mn_{0.06}(OH)_2$ were mixed at a molar ratio of 1.12. The mixed material was sintered for the first time in an oxygen atmosphere at a sintering temperature of 812°C. The sintered material was crushed, and the crushed material was added with $Al_2O_3$ containing 1.2 mol% of Al, and sintered for the second time at a sintering temperature of 610°C to obtain a small single crystal particle material with a $D_{50}$ of 3.5 $\mu$m. The single crystal material was treated at 600°C for 8 hours, and had a BET decreased by a change rate of 3%.

The above-mentioned large agglomerated particles and small single crystal particles were mixed in a mass ratio of 8 : 2 to obtain a cathode active material for lithium secondary battery. The cathode active material was treated at 600°C for 8 hours, and had a BET increased by a change rate of 19%.

**Example 3**

Firstly, an agglomerated cathode precursor (10.5 $\mu$m) having a composition of $Ni_{0.86}Co_{0.11}Mn_{0.03}(OH)_2$ and a single crystal cathode precursor (4 $\mu$m) having a composition of $Ni_{0.88}Co_{0.08}Mn_{0.04}(OH)_2$ were separately prepared by a liquid-phase co-precipitation process.

LiOH and $Ni_{0.86}Co_{0.11}Mn_{0.03}(OH)_2$ were mixed at a molar ratio of 1.06. The mixed material was sintered for the first time in an oxygen atmosphere at a sintering temperature of 725°C. The sintered material was crushed, and the crushed material was added with boric acid containing 0.8 mol% of B, and sintered for the second time at a sintering temperature of 380°C to obtain a large agglomerated particle material with a $D_{50}$ of 10.0 $\mu$m. The agglomerated material was treated at 600°C for 8 hours, and had a BET increased by a change rate of 26%.

LiOH and $Ni_{0.88}Co_{0.08}Mn_{0.04}(OH)_2$ were mixed at a molar ratio of 1.11. The mixed material was sintered for the first time in an oxygen atmosphere at a sintering temperature of 805°C. The sintered material was crushed, and the crushed material was added with $Al_2O_3$ containing 1.0 mol% of Al, and sintered for the second time at a sintering temperature of 610°C to obtain a small single crystal particle material with a $D_{50}$ of 3.5 $\mu$m. The single crystal material was treated at 600°C for 8 hours, and had a BET decreased by a change rate of 2%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET increased by a change rate of 20%.

**Example 4**

Firstly, an agglomerated cathode precursor (10.5 $\mu$m) having a composition of $Ni_{0.86}Co_{0.11}Mn_{0.03}(OH)_2$ and a single crystal cathode precursor (4 $\mu$m) having a composition of $Ni_{0.88}Co_{0.08}Mn_{0.04}(OH)_2$ were separately prepared by a liquid-phase co-precipitation process.

LiOH and $Ni_{0.86}Co_{0.11}Mn_{0.03}(OH)_2$ were mixed at a molar ratio of 1.06. The mixed material was sintered for the first time in an oxygen atmosphere at a sintering temperature of 685°C. The sintered material was crushed, and the crushed material was added with boric acid containing 0.8 mol% of B, and sintered for the second time at a sintering temperature of 380°C to obtain a large agglomerated particle material with a $D_{50}$ of 10.0 $\mu$m. The agglomerated material was treated at 600°C for 8 hours, and had a BET increased by a change rate of 26%.

LiOH and $Ni_{0.88}Co_{0.08}Mn_{0.04}(OH)_2$ were mixed at a molar ratio of 1.11. The mixed material was sintered for the first time in an oxygen atmosphere at a sintering temperature of 805°C. The sintered material was crushed, and the crushed material was added with $Al_2O_3$ containing 1.0 mol% of Al, and sintered for the second time at a sintering temperature of 610°C to obtain a small single crystal particle material with a $D_{50}$ of 3.5 $\mu$m. The single crystal material was treated at 600°C for 8 hours, and had a BET decreased by a change rate of 2%.

The above-mentioned large agglomerated particles and small single crystal particles were mixed in a mass ratio of 3 : 7 to obtain a cathode active material for lithium secondary battery. The cathode active material was treated at 600°C for 8 hours, and had a BET increased by a change rate of 6%.

**Example 5**

Firstly, an agglomerated cathode precursor (10.5 $\mu$m) having a composition of $Ni_{0.88}Co_{0.10}Mn_{0.02}(OH)_2$ and a single crystal cathode precursor (4 $\mu$m) having a composition of $Ni_{0.90}Co_{0.08}Mn_{0.02}(OH)_2$ were separately prepared by a liquid-phase co-precipitation process.

LiOH and $Ni_{0.88}Co_{0.10}Mn_{0.02}(OH)_2$ were mixed at a molar ratio of 1.08. The mixed material was sintered for the first time in an oxygen atmosphere at a sintering temperature of 780°C. The sintered material was crushed, and the crushed material was added with boric acid containing 1 mol% of B, and sintered for the second time at a sintering temperature of 400°C to obtain a large agglomerated particle material with a $D_{50}$ of 10.0 $\mu$m. The agglomerated material was treated at 600°C for 8 hours, and had a BET increased by a change rate of 32%.

LiOH and $Ni_{0.90}Co_{0.08}Mn_{0.02}(OH)_2$ were mixed at a molar ratio of 1.12. The mixed material was sintered for the first time in an oxygen atmosphere at a sintering temperature of 812°C. The sintered material was crushed, and the crushed material was added with $Al_2O_3$ containing 1 mol% of Al, and sintered for the second time at a sintering temperature of 620°C to obtain a small single crystal particle material with a $D_{50}$ of 3.5 $\mu$m. The single crystal material was treated at 600°C for 8 hours, and had a BET decreased by a change rate of 2%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET increased by a change rate of 22%.

**Example 6**

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.86}Co_{0.08}Mn_{0.06}(OH)_2$ were separately prepared by a liquid-phase co-precipitation process.

LiOH and $Ni_{0.83}Co_{0.11}Mn_{0.06}(OH)_2$ were mixed at a molar ratio of 1.08. The mixed material was sintered for the first time in an oxygen atmosphere at a sintering temperature of 750°C. The sintered material was crushed, and the crushed material was added with boric acid containing 1 mol% of B, and sintered for the second time at a sintering temperature of 400°C to obtain a large agglomerated particle material with a $D_{50}$ of 10.0 $\mu$m. The agglomerated material was treated at 600°C for 8 hours, and had a BET increased by a change rate of 35%.

LiOH and $Ni_{0.86}Co_{0.08}Mn_{0.06}(OH)_2$ were mixed at a molar ratio of 1.12. The mixed material was sintered for the first time in an oxygen atmosphere at a sintering temperature of 812°C. The sintered material was crushed, and the crushed material was added with boric acid containing 0.4 mol% of B, and sintered for the second time at a sintering temperature of 400°C to obtain a small single crystal particle material with a $D_{50}$ of 3.5 $\mu$m. The single crystal material was treated at 600°C for 8 hours, and had a BET increased by a change rate of 9%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET increased by a change rate of 27%.

**Example 7**

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.86}Co_{0.08}Mn_{0.06}(OH)_2$ were separately prepared by a liquid-phase co-precipitation process.

LiOH and $Ni_{0.83}Co_{0.11}Mn_{0.06}(OH)_2$ were mixed at a molar ratio of 1.08. The mixed material was sintered for the first time in an oxygen atmosphere at a sintering temperature of 750°C. The sintered material was crushed, and the crushed material was added with boric acid containing 0.5 mol% of B, and sintered for the second time at a sintering temperature of 400°C to obtain a large agglomerated particle material with a $D_{50}$ of 10.0 $\mu$m. The agglomerated material was treated at 600°C for 8 hours, and had a BET increased by a change rate of 11%.

LiOH and $Ni_{0.86}Co_{0.08}Mn_{0.06}(OH)_2$ were mixed at a molar ratio of 1.12. The mixed material was sintered for the first time in an oxygen atmosphere at a sintering temperature of 812°C. The sintered material was crushed, and the crushed material was added with $Al_2O_3$ containing 1 mol% of Al, and sintered for the second time at a sintering temperature of 620°C to obtain a small single crystal particle material with a $D_{50}$ of 3.5 $\mu$m. The single crystal material was treated at 600°C for 8 hours, and had a BET decreased by a change rate of 2%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET increased by a change rate of 7%.

**Example 8**

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.86}Co_{0.08}Mn_{0.06}(OH)_2$ were separately prepared by a liquid-phase co-precipitation process.

LiOH and $Ni_{0.83}Co_{0.11}Mn_{0.06}(OH)_2$ were mixed at a molar ratio of 1.08. The mixed material was sintered for the first time in an oxygen atmosphere at a sintering temperature of 750°C. The sintered material was crushed, and the crushed material was added with $Al_2O_3$ containing 1 mol% of Al, and sintered for the second time at a sintering temperature of 620°C to obtain a large agglomerated particle material with a $D_{50}$ of 10.0 $\mu$m. The agglomerated material was treated at 600°C for 8 hours, and had a BET decreased by a change rate of 3%.

LiOH and $Ni_{0.86}Co_{0.08}Mn_{0.06}(OH)_2$ were mixed at a molar ratio of 1.12. The mixed material was sintered for the first time in an oxygen atmosphere at a sintering temperature of 812°C. The sintered material was crushed, and the crushed material was added with $Al_2O_3$ containing 1 mol% of Al, and sintered for the second time at a sintering temperature of 620°C to obtain a small single crystal particle material with a $D_{50}$ of 3.5 $\mu$m. The single crystal material was treated at 600°C for 8 hours, and had a BET decreased by a change rate of 2%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET decreased by a change rate of 3%.

**Example 9**

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.86}Co_{0.08}Mn_{0.06}(OH)_2$ were separately prepared by a liquid-phase co-precipitation process.

LiOH and $Ni_{0.83}Co_{0.11}Mn_{0.06}(OH)_2$ were mixed at a molar ratio of 1.08. The mixed material was sintered for the first time in an oxygen atmosphere at a sintering temperature of 750°C. The sintered material was crushed, and the crushed material was added with boric acid containing 0.5 mol% of B, and sintered for the second time at a sintering temperature of 400°C to obtain a large agglomerated particle material with a $D_{50}$ of 10.0 $\mu$m. The agglomerated material was treated at 600°C for 8 hours, and had a BET increased by a change rate of 11%.

LiOH and $Ni_{0.86}Co_{0.08}Mn_{0.06}(OH)_2$ were mixed at a molar ratio of 1.12. The mixed material was sintered for the first time in an oxygen atmosphere at a sintering temperature of 812°C. The sintered material was crushed, and the crushed material was added with boric acid containing 0.4 mol% of B, and sintered for the second time at a sintering temperature of 400°C to obtain a small single crystal particle material with a $D_{50}$ of 3.5 $\mu$m. The single crystal material was treated at 600°C for 8 hours, and had a BET increased by a change rate of 9%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET increased by a change rate of 10%.

**Example 10**

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.84}Co_{0.08}Mn_{0.08}(OH)_2$ were separately prepared by a liquid-phase co-precipitation process.

LiOH and $Ni_{0.83}Co_{0.11}Mn_{0.06}(OH)_2$ were mixed at a molar ratio of 1.08. The mixed material was sintered for the first time in an oxygen atmosphere at a sintering temperature of 750°C. The sintered material was crushed, and the crushed material was added with boric acid containing 0.5 mol% of B, and sintered for the second time at a sintering temperature of 400°C to obtain a large agglomerated particle material with a $D_{50}$ of 10.0 $\mu$m. The agglomerated material was treated at 600°C for 8 hours, and had a BET increased by a change rate of 35%.

LiOH and $Ni_{0.84}Co_{0.08}Mn_{0.08}(OH)_2$ were mixed at a molar ratio of 1.12. The mixed material was sintered for the first time in an oxygen atmosphere at a sintering temperature of 812°C. The sintered material was crushed, and the crushed material was added with boric acid containing 0.4 mol% of B, and sintered for the second time at a sintering temperature of 400°C to obtain a small single crystal particle material with a $D_{50}$ of 3.5 $\mu$m. The single crystal material was treated at 600°C for 8 hours, and had a BET decreased by a change rate of 2%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET increased by a change rate of 24%.

**Comparative Example 1**

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.80}Co_{0.11}Mn_{0.09}(OH)_2$ were separately prepared by a liquid-phase co-precipitation process.

LiOH and $Ni_{0.83}Co_{0.11}Mn_{0.06}(OH)_2$ were mixed at a molar ratio of 1.08. The mixed material was sintered for the first time in an oxygen atmosphere at a sintering temperature of 750°C. The sintered material was crushed, and the crushed material was added with boric acid containing 1 mol% of B, and sintered for the second time at a sintering temperature of 400°C to obtain a large agglomerated particle material with a $D_{50}$ of 10.0 $\mu$m. The agglomerated material was treated at 600°C for 8 hours, and had a BET increased by a change rate of 35%.

LiOH and $Ni_{0.80}Co_{0.11}Mn_{0.09}(OH)_2$ were mixed at a molar ratio of 1.12. The mixed material was sintered for the first time in an oxygen atmosphere at a sintering temperature of 820°C. The sintered material was crushed, and the crushed material was added with $Al_2O_3$ containing 1 mol% of Al, and sintered for the second time at a sintering temperature of 620°C to obtain a small single crystal particle material with a $D_{50}$ of 3.5 $\mu$m. The single crystal material was treated at 600°C for 8 hours, and had a BET decreased by a change rate of 2%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET increased by a change rate of 25%.

**Comparative Example 2**

Firstly, an agglomerated cathode precursor (10.5 $\mu$m) having a composition of $Ni_{0.83}Co_{0.11}Mn_{0.06}(OH)_2$ and a single crystal cathode precursor (4 $\mu$m) having a composition of $Ni_{0.83}Co_{0.11}Mn_{0.06}(OH)_2$ were separately prepared by a liquid-phase co-precipitation process.

LiOH and $Ni_{0.83}Co_{0.11}Mn_{0.06}(OH)_2$ were mixed at a molar ratio of 1.08. The mixed material was sintered for the first time in an oxygen atmosphere at a sintering temperature of 750°C. The sintered material was crushed, and the crushed material was added with boric acid containing 1 mol% of B, and sintered for the second time at a sintering temperature of 400°C to obtain a large agglomerated particle material with a $D_{50}$ of 10.0 $\mu$m. The agglomerated material was treated at 600°C for 8 hours, and had a BET increased by a change rate of 35%.

LiOH and $Ni_{0.83}Co_{0.11}Mn_{0.06}(OH)_2$ were mixed at a molar ratio of 1.12. The mixed material was sintered for the first time in an oxygen atmosphere at a sintering temperature of 816°C. The sintered material was crushed, and the crushed material was added with $Al_2O_3$ containing 1 mol% of Al, and sintered for the second time at a sintering temperature of 620°C to obtain a small single crystal particle material with a $D_{50}$ of 3.5 $\mu$m. The single crystal material was treated at 600°C for 8 hours, and had a BET decreased by a change rate of 2%.

The above-mentioned large agglomerated particles and small single crystal particles were mixed in a mass ratio of 7 : 3 to obtain a cathode active material for lithium secondary battery. The cathode active material was treated at 600°C for 8 hours, and had a BET increased by a change rate of 25%.

Specific Surface Area Test:

Tri-star 3020 Specific Surface Area Analyzer was used for the test. 3 g of sample was weighed. A sample tube was installed on the vacuum joint at the port of a degassing station. The heating temperature was set at 300°C, and the degassing time was set as 120 minutes. After degassing, the sample tube was cooled. The mass of the empty sample tube and the mass of the sample and the sample tube after degassing were input through the software interface of the analyzer. The specific surface area data (BET method) calculated and output by the software was recorded, and the specific surface area test for the cathode material sample was completed.

Particle Size Test:

Mastersizer 2000 Laser Particle Size Analyzer was used for the test. The following modifications were made to the item of "Measurement" in the software: both "Sample Measurement Time" and "Background Measurement Time" in the item of "Measurement Times" were set to 6 seconds. "Repeat Times" were set to 3 times, and "Delay Time" was set to 5 seconds in the item of "Repeat Measurement". "Generate Average Result Record from Measurements" was clicked. Next, "Start" was clicked to automatically measure the background. After the automatic measurement was completed, 40 ml of sodium pyrophosphate was initially added, and a small amount of sample was then added by a spatula. "Start" was clicked until the obscuration reached 1/2 of the visually perceived range between 10 to 20%. Finally, the three results and the average value thereof were recorded.

**Preparation of Button-type Battery**

Firstly, a composite nickel-cobalt-manganese multi-element cathode active material for non-aqueous electrolyte secondary batteries, acetylene black and polyvinylidene fluoride (PVDF) were mixed and coated on an aluminum foil, and dried in an oven. The dried cathode sheet, separator, anode sheet and electrolyte were assembled into a 2025 Type button-type battery in an Ar-filled glove box having both the moisture content and the oxygen content of less than 5 ppm.

**Method for Measuring the Initial Discharge Capacity:**

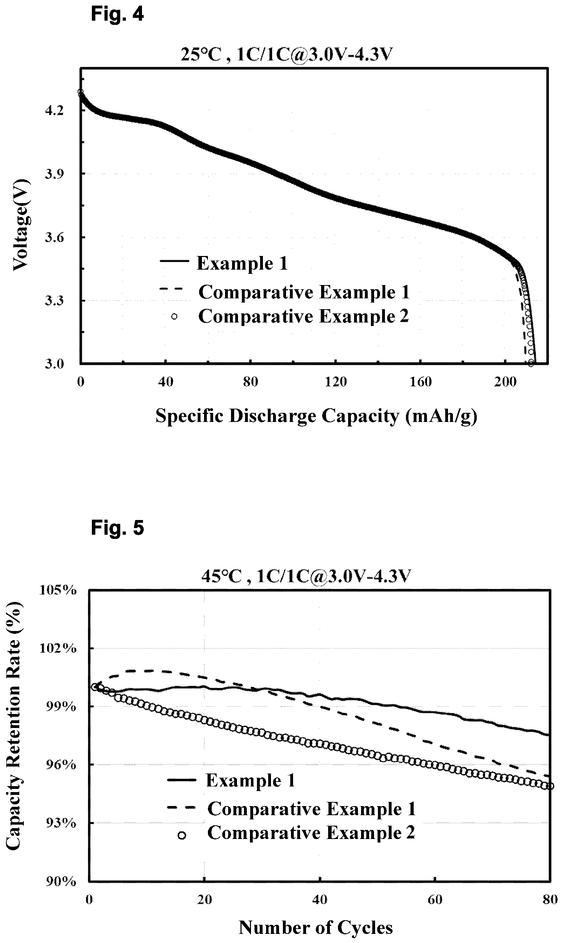

The button-type battery was placed for 2 hours after fabrication. After the open circuit voltage was stabilized, the cathode was charged to a cut-off voltage of 4.3V at a current density of 0.1C, then charged at a constant voltage for 30 minutes, and subsequently discharged to a cut-off voltage of 3.0 V at the same current density; this process was performed one more time in the same manner, and the discharge capacity was regarded as the initial discharge capacity. Figure 4 shows the charge-discharge curves of the button-type batteries prepared from the cathode materials in Example 1, and Comparative Examples 1 and 2. It can be seen that the cathode material in Example 1 has a higher initial discharge capacity as compared with that in the Comparative Examples.

**Preparation of Full Battery and Gas Production Test:**

A cathode material Lithium Nickel Cobalt Manganese Oxide, an anode material graphite, a conductive agent carbon black, and a binder PVDF were dried in a vacuum oven at 120°C for 12 hours. The oven-dried cathode material, conductive agent carbon black, PVDF, and NMP were mixed uniformly to prepare a cathode slurry. The slurry was coated on an aluminum foil by a coater for lithium batteries, and dried. The electrode sheet was cut by an electrode sheet cutter, and rolled by an electrode sheet roller.

950 g of dried artificial graphite, 13 g of Super-P, 14 g of CMC, 46 g of SBR solution and 1200 g of deionized water were mixed uniformly to prepare an anode slurry. The slurry was coated on a copper foil by a coater for lithium batteries, and dried. The anode sheet obtained after coating was dried in a vacuum oven, cut by an electrode sheet cutter, and rolled by an electrode sheet roller.

The above-mentioned cathode sheet and anode sheet were wound by a conventional preparation method, and an electrolyte was injected to make a full battery. The initial thickness of the full battery after formation was measured, stored in a constant-temperature cabinet at 45°C for 7 days, and then the thickness of the full battery was measured again. The increase rate of the thickness was used to characterize the gas production of the cathode material in the full battery. Figure 5 shows the change in cycle life for the full batteries prepared from the cathode materials in Example 1, Comparative Examples 1 and 2. It can be seen that the full battery prepared from the cathode material in Example 1 shows a better stability and a longer cycle life.

| | Type of Particles | Ni Content | $D_{50}$ | Blending Ratio of large to small particles | Change in BET | Change in BET of agglomerated particles | Change in BET of single crystal particles | Compaction Density | Initial Charge Capacity | Cycle Life | Gas Production |
|---|---|---|---|---|---|---|---|---|---|---|---|
| | / | mol% | μm | / | % | % | % | g/cm$^3$ | mAh/g | % | % |
| Example 1 | large agglomerated particles | 83 | 10 | 7:3 | increased by 24 | increased by 35 | decreased by 2 | 3.55 | 214.3 | 97.4 | 7.2 |
| | small single crystal particles | 86 | 3.5 | | | | | | | | |
| Example 2 | large agglomerated particles | 83 | 10 | 8 : 2 | increased by 19 | increased by 24 | decreased by 3 | 3.48 | 215.2 | 97.0 | 8.5 |
| | small single crystal particles | 86 | 3.5 | | | | | | | | |
| Example 3 | large agglomerated particles | 86 | 10 | 7:3 | increased by 20 | increased by 26 | decreased by 2 | 3.56 | 216.7 | 96.9 | 9.3 |
| | small single crystal particles | 88 | 3.5 | | | | | | | | |
| Example 4 | large agglomerated particles | 86 | 10 | 3 : 7 | increased by 6 | increased by 26 | decreased by 2 | 3.67 | 215.6 | 96.5 | 6.4 |
| | small single crystal particles | 88 | 3.5 | | | | | | | | |

13

(continued)

| Type of Particles | | Ni Content (mol%) | D50 (μm) | Blending Ratio of large to small particles (/) | Change in BET (%) | Change in BET of agglomerated particles (%) | Change in BET of single crystal particles (%) | Compaction Density (g/cm³) | Initial Charge Capacity (mAh/g) | Cycle Life (%) | Gas Production (%) |
|---|---|---|---|---|---|---|---|---|---|---|---|
| Example 5 | large agglomerated particles | 88 | 10 | 7 : 3 | increased by 22 | increased by 32 | decreased by 2 | 3.58 | 217.5 | 97.3 | 10.6 |
| | small single crystal particles | 90 | 3.5 | | | | | | | | |
| Example 6 | large agglomerated particles | 83 | 10 | 7 : 3 | increased by 27 | increased by 35 | increased by 9 | 3.61 | 215.0 | 94.3 | 12.7 |
| | small single crystal particles | 86 | 3.5 | | | | | | | | |
| Example 7 | large agglomerated particles | 83 | 10 | 7 : 3 | increased by 7 | increased by 11 | decreased by 2 | 3.60 | 214.5 | 95.6 | 11.4 |
| | small single crystal particles | 86 | 3.5 | | | | | | | | |
| Example 8 | large agglomerated particles | 83 | 10 | 7 : 3 | decreased by 3 | decreased by 3 | decreased by 2 | 3.57 | 214.2 | 93.3 | 10.3 |
| | small single crystal particles | 86 | 3.5 | | | | | | | | |

(continued)

|  | Type of Particles | Ni Content | $D_{50}$ | Blending Ratio of large to small particles | Change in BET | Change in BET of agglomerated particles | Change in BET of single crystal particles | Compaction Density | Initial Charge Capacity | Cycle Life | Gas Production |
|---|---|---|---|---|---|---|---|---|---|---|---|
|  | / | mol% | μm | / | % | % | % | g/cm³ | mAh/g | % | % |
| Example 9 | large agglomerated particles | 83 | 10 | 7 : 3 | increased by 10 | increased by 11 | increased by 9 | 3.62 | 213.5 | 94.4 | 11.6 |
|  | small single crystal particles | 86 | 3.5 | | | | | | | | |
| Example 10 | large agglomerated particles | 83 | 10 | 7 : 3 | increased by 24 | increased by 35 | decreased by 2 | 3.55 | 212.8 | 95.3 | 8.9 |
|  | small single crystal particles | 84 | 3.5 | | | | | | | | |
| Comparative Example 1 | large agglomerated particles | 83 | 10 | 7:3 | increased by 25 | increased by 35 | decreased by 2 | 3.53 | 209.7 | 95.2 | 7.6 |
|  | small single crystal particles | 80 | 3.5 | | | | | | | | |
| Comparative Example 2 | large agglomerated particles | 83 | 10 | 7:3 | increased by 25 | increased by 35 | decreased by 2 | 3.47 | 212.3 | 94.8 | 10.7 |
|  | small single crystal particles | 83 | 3.5 | | | | | | | | |

The cathode active material and the lithium ion battery thereof provided by the present invention achieve the following beneficial effects:

1) As compared with the agglomerated material, the single crystal material with the same nickel content has better cycle life and lower gas production performance. Therefore, the incorporation of single crystal material can effectively improve the properties of the blended materials, such as cycle life and gas production;

2) Due to its special single crystal morphology, the single crystal material has a lower capacity per gram than that of the agglomerated material with the same nickel content. Therefore, the present invention adopts the single crystal material with a slightly higher nickel content to make up for its shortcoming of low capacity per gram. At the same time, its properties such as cycle life and gas production are maintained at the same level as the agglomerated material with a lower nickel content;

3) The blended small particle single crystal material can enter the voids between the large agglomerated particles, exert synergistic effects of mutual supporting and filling together with the large agglomerated particles, and thereby effectively improve the compaction density of the material; and

4) The problems in single crystal materials, such as poor fluidity, difficulty in screening and pulping, can be effectively overcome by adding a small amount of large agglomerated spherical particles in a system mainly comprising small single crystal particles.

Although specific embodiments have been described, these embodiments have been presented by way of example only and are not intended to limit the scope of the invention. The appended claims and their equivalents are intended to cover all modifications, substitutions, and alterations that fall within the scope and spirit of the invention.

**Claims**

1. A cathode active material for lithium secondary battery, wherein the cathode active material comprises agglomerated particles represented by Formula A1 and single crystal particles represented by Formula A2

$$A1: \quad Li_{1+a1}Ni_{x1}Co_{y1}M_{z1}M'_{1-x1-y1-z1}O_2$$
$$A2: \quad Li_{1+a2}Ni_{x2}Co_{y2}M_{z2}M'_{1-x2-y2-z2}O_2$$

wherein

M is one or two elements selected from Mn and Al,
M' is one or more elements selected from B, F, Mg, Si, P, Ca, Ti, V, Cr, Fe, Ga, Sr, Y, Zr, Nb, Mo, Sn, Ba, La, Ce, and W,
$-0.03 \leq a1 \leq 0.20$, preferably $-0.01 \leq a1 \leq 0.14$, more preferably $0 \leq a1 \leq 0.10$, and particularly preferably $0.01 \leq a1 \leq 0.08$,
$0.30 \leq x1 \leq 0.99$, preferably $0.57 \leq x1 \leq 0.99$, more preferably $0.72 \leq x1 \leq 0.99$, and particularly preferably $0.80 \leq x1 \leq 0.99$,
$0 < y1 \leq 0.30$, preferably $0 \leq y1 \leq 0.21$, more preferably $0 \leq y1 \leq 0.15$, and particularly preferably $0 < y1 \leq 0.10$,
$0 \leq z1 \leq 0.30$, preferably $0 \leq z1 \leq 0.18$, more preferably $0 \leq z1 \leq 0.11$, and particularly preferably $0 \leq z1 \leq 0.06$,
$0 \leq 1-x1-y1-z1 \leq 0.10$, preferably $0 \leq 1-x1-y1-z1 \leq 0.08$, more preferably $0 \leq 1-x1-y1-z1 \leq 0.05$, and particularly preferably $0 \leq 1-x1-y1-z1 \leq 0.03$,
$-0.03 \leq a2 \leq 0.20$, preferably $-0.02 \leq a2 \leq 0.16$, more preferably $-0.01 \leq a2 \leq 0.14$, and particularly preferably $0 \leq a2 \leq 0.08$,
$0.31 \leq x2 \leq 1.00$, preferably $0.59 \leq x2 \leq 0.995$, more preferably $0.75 \leq x2 \leq 0.995$, and particularly preferably $0.81 \leq x2 \leq 0.995$,
$0 \leq y2 \leq 0.30$, preferably $0 \leq y2 \leq 0.21$, more preferably $0 \leq y2 \leq 0.15$, and particularly preferably $0 \leq y2 \leq 0.10$,
$0 \leq z2 \leq 0.30$, preferably $0 \leq z2 \leq 0.18$, more preferably $0 \leq z2 \leq 0.11$, and particularly preferably $0 \leq z2 \leq 0.08$,
$0 \leq 1-x2-y2-z2 \leq 0.10$, preferably $0 \leq 1-x2-y2-z2 \leq 0.08$, more preferably $0 \leq 1-x2-y2-z2 \leq 0.05$, and particularly preferably $0 \leq 1-x2-y2-z2 \leq 0.03$,
with the proviso that: $0 < x2-x1 \leq 0.5$, preferably $0.01 \leq x2-x1 \leq 0.27$, more preferably $0.01 \leq x2-x1 \leq 0.2$, further preferably $0.015 \leq x2-x1 \leq 0.20$, and particularly preferably $0.02 \leq x2-x1 \leq 0.15$.

2. The cathode active material according to claim 1, wherein a2 > a1, preferably $0.01 \leq a2\text{-}a1 \leq 0.20$, more preferably $0.01 \leq a2\text{-}a1 \leq 0.12$, particularly preferably $0.01 \leq a2\text{-}a1 \leq 0.07$, and especially preferably $0.01 \leq a2\text{-}a1 \leq 0.04$.

3. The cathode active material according to claim 1 or 2, wherein the agglomerated particles have a particle size $D_{50}$ of 6 to 30 $\mu$m, preferably 8 to 25 $\mu$m, more preferably 9 to 20 $\mu$m, and particularly preferably 10 to 18 $\mu$m.

4. The cathode active material according to any one of claims 1 to 3, wherein the single crystal particles have a particle size $D_{50}$ of 0.1 to 10 $\mu$m, preferably 0.5 to 8.0 $\mu$m, more preferably 1.0 to 6.0 $\mu$m, and particularly preferably 1.5 to 4.5 $\mu$m.

5. The cathode active material according to any one of claims 1 to 4, wherein the agglomerated particles are present in an amount of 20 to 90%, preferably 45 to 85%, more preferably 50 to 80 %, and particularly preferably 60 to 80%, based on the weight of the cathode active material.

6. The cathode active material according to any one of claims 1 to 5, wherein the single crystal particles are present in an amount of 10 to 80%, preferably 10 to 70 %, more preferably 15 to 60 %, and particularly preferably 20 to 40 %, based on the weight of the cathode active material.

7. The cathode active material according to any one of claims 1 to 6, wherein the agglomerated particles have a coating layer containing at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, wherein the coating element is present in an amount of 0.1 to 2 mol%, and preferably about 1 mol%, based on the agglomerated particles.

8. The cathode active material according to any one of claims 1 to 7, wherein the single crystal particles have a coating layer containing at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, wherein the coating element is present in an amount of 0.1 to 2 mol%, and preferably about 1 mol%, based on the single crystal particles.

9. The cathode active material according to any one of claims 1 to 8, wherein both the agglomerated particles and the single crystal particles respectively have a coating layer containing at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, wherein the coating element is present in an amount of 0.1 to 2 mol%, and preferably about 1 mol%, based on the agglomerated particles and the single crystal particles respectively.

10. The cathode active material according to claim 9, wherein the coating element contained in the coating layer of the agglomerated particles is different from the coating element contained in the coating layer of the single crystal particles.

11. The cathode active material according to any one of claims 1 to 10, wherein the cathode active material has specific surface areas $BET_{before}$ and $BET_{after}$ before and after sintering at 600°C in an air atmosphere for 8 hours, which satisfy: preferably,

$$|BET_{after} - BET_{before}| / BET_{before} \leq 50\%,$$

$$|BET_{after} - BET_{before}| / BET_{before} \leq 30\%.$$

12. The cathode active material according to any one of claims 1 to 11, wherein the agglomerated particles have specific surface areas $BET_{before}$ and $BET_{after}$ before and after sintering at 600°C in an air atmosphere for 8 hours, which satisfy: preferably,

$$(BET_{after} - BET_{before}) / BET_{before} \geq 15\%,$$

$$40\% \geq (BET_{after} - BET_{before}) / BET_{before} \geq 20\%.$$

13. The cathode active material according to any one of claims 1 to 12, wherein the single crystal particles have specific surface areas $BET_{before}$ and $BET_{after}$ before and after sintering at 600°C in an air atmosphere for 8 hours, which satisfy: preferably,

$$(BET_{before} - BET_{after}) / BET_{before} \leq 15\%,$$

$$0 \leq (BET_{before} - BET_{after}) / BET_{before} \leq 10\%.$$

14. The cathode active material according to any one of claims 1 to 13, wherein the cathode active material does not comprise nickel-free active materials, such as lithium manganese iron phosphate.

15. The cathode active material according to any one of claims 1 to 14, wherein the cathode active material consists of the agglomerated particles represented by Formula A1 and the single crystal particles represented by Formula A2.

16. A method for preparing a cathode active material, including the steps of:

i) preparing an agglomerated particle precursor represented by Formula A3 and a single crystal particle precursor represented by Formula A4 separately by a liquid-phase co-precipitation process

A3: $Ni_{x1}Co_{y1}M_{z1}M'_{1-x1-y1-z1}(OH)_2$

A4: $Ni_{x2}Co_{y2}M_{z2}M'_{1-x2-y2-z2}(OH)_2$

wherein

M is one or two elements selected from Mn and Al,
M' is one or more elements selected from B, F, Mg, Si, P, Ca, Ti, V, Cr, Fe, Ga, Sr, Y, Zr, Nb, Mo, Sn, Ba, La, Ce, and W,
$0.30 \leq x1 \leq 0.99$, preferably $0.57 \leq x1 \leq 0.99$, more preferably $0.72 \leq x1 \leq 0.99$, and particularly preferably $0.80 \leq x1 \leq 0.99$,
$0 \leq y1 \leq 0.30$, preferably $0 \leq y1 \leq 0.21$, more preferably $0 \leq y1 \leq 0.15$, and particularly preferably $0 < y1 \leq 0.10$,
$0 \leq z1 \leq 0.30$, preferably $0 \leq z1 \leq 0.18$, more preferably $0 \leq z1 \leq 0.11$, and particularly preferably $0 \leq z1 \leq 0.06$,
$0 \leq 1-x1-y1-z1 \leq 0.10$, preferably $0 \leq 1-x1-y1-z1 \leq 0.08$, more preferably $0 \leq 1-x1-y1-z1 \leq 0.05$, and particularly preferably $0 \leq 1-x1-y1-z1 \leq 0.03$,
$0.31 \leq x2 \leq 1.00$, preferably $0.59 \leq x2 \leq 0.995$, more preferably $0.75 \leq x2 \leq 0.995$, and particularly preferably $0.81 \leq x2 \leq 0.995$,
$0 \leq y2 \leq 0.30$, preferably $0 \leq y2 \leq 0.21$, more preferably $0 \leq y2 \leq 0.15$, and particularly preferably $0 \leq y2 \leq 0.10$,
$0 \leq z2 \leq 0.30$, preferably $0 \leq z2 \leq 0.18$, more preferably $0 \leq z2 \leq 0.11$, and particularly preferably $0 \leq z2 \leq 0.08$,
$0 \leq 1-x2-y2-z2 \leq 0.10$, preferably $0 \leq 1-x2-y2-z2 \leq 0.08$, more preferably $0 \leq 1-x2-y2-z2 \leq 0.05$, and particularly preferably $0 \leq 1-x2-y2-z2 \leq 0.03$,
with the proviso that: $0 < x2-x1 \leq 0.5$, preferably $0.01 \leq x2-x1 \leq 0.27$, more preferably $0.01 \leq x2-x1 \leq 0.20$, further preferably $0.015 \leq x2-x1 \leq 0.20$, and particularly preferably $0.02 \leq x2-x1 \leq 0.15$;

ii) mixing a lithium source with the agglomerated particle precursor at a molar ratio of r1, and optionally incorporating M' as a doping element, wherein $0.97 \leq r1 \leq 1.20$, preferably $0.99 \leq r1 \leq 1.14$, more preferably $1.00 \leq r1 \leq 1.10$, and particularly preferably $1.01 \leq r1 \leq 1.08$; then performing a primary sintering at the sintering temperature T1 in a sintering atmosphere of air or oxygen, preferably oxygen, wherein $600°C \leq T1 \leq 1000°C$, preferably $675°C \leq T1 \leq 875°C$, more preferably $690°C \leq T1 \leq 800°C$, and particularly preferably $690°C \leq T1 \leq 780°C$; and then obtaining agglomerated particles via crushing;
iii) mixing a lithium source with the single crystal particle precursor at a molar ratio of r2, and optionally incorporating M' as a doping element, wherein $0.97 \leq r2 \leq 1.20$, preferably $0.98 \leq r2 \leq 1.16$, more preferably $0.99 \leq r2 \leq 1.14$, and particularly preferably $1.00 \leq r2 \leq 1.08$; then performing a primary sintering at the sintering temperature T2 in a sintering atmosphere of air or oxygen, preferably oxygen, wherein $650°C \leq T2 \leq 1050°C$, preferably $730°C \leq T2 \leq 930°C$, more preferably $750°C \leq T2 \leq 930°C$, and particularly preferably $750°C \leq T2 \leq 900°C$; and then obtaining single crystal particles via crushing; and
iv) blending the agglomerated particles of Step ii) with the single crystal particles of Step iii) to obtain the cathode active material.

17. The method according to claim 16, wherein r2 > r1, preferably $0.01 \leq r2-r1 \leq 0.20$, more preferably $0.01 \leq r2-r1 \leq 0.12$, particularly preferably $0.01 \leq r2-r1 \leq 0.07$, and especially preferably $0.01 \leq r2-r1 \leq 0.04$.

18. The method according to claim 16 or 17, wherein the agglomerated particle precursor has a particle size $D_{50}$ of 6.5 to 30.5 $\mu$m, preferably 8.5 to 25.5 $\mu$m, more preferably 9.5 to 20.5 $\mu$m, and particularly preferably 10.5 to 18.5 $\mu$m.

19. The method according to any one of claims 16 to 18, wherein the agglomerated particles have a particle size $D_{50}$ of 6 to 30 $\mu$m, preferably 8 to 25 $\mu$m, more preferably 9 to 20 $\mu$m, and particularly preferably 10 to 18 $\mu$m.

20. The method according to any one of claims 16 to 19, wherein the single crystal particle precursor has a particle size $D_{50}$ of 0.1 to 30.5 $\mu$m, preferably 1.0 to 17.3 $\mu$m, more preferably 1.0 to 9.3 $\mu$m, and particularly preferably 1.0 to 6.0 $\mu$m.

21. The method according to any one of claims 16 to 20, wherein the single crystal particles have a particle size $D_{50}$ of 0.1 to 10 $\mu$m, preferably 0.5 to 8.0 $\mu$m, more preferably 1.0 to 6.0 $\mu$m, and particularly preferably 1.5 to 4.5 $\mu$m.

22. The method according to any one of claims 16 to 21, wherein the agglomerated particles are present in an amount of 20 to 90%, preferably 45 to 85 %, more preferably 50 to 80 %, and particularly preferably 60 to 80 %, based on the weight of the cathode active material.

23. The method according to any one of claims 16 to 22, wherein the single crystal particles are present in an amount of 10 to 80%, preferably 10 to 70 %, more preferably 15 to 60 %, and particularly preferably 20 to 40 %, based on the weight of the cathode active material.

24. The method according to any one of claims 16 to 23, wherein, prior to Step iv), the agglomerated particles are mixed with a coating precursor comprising at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, and then a secondary sintering is performed at the sintering temperature T3 in a sintering atmosphere of air or oxygen, preferably oxygen, to obtain secondarily sintered agglomerated particles, wherein $250°C \leq T3 \leq 800°C$, preferably $250°C \leq T3 \leq 600°C$, more preferably $250°C \leq T3 \leq 480°C$, and particularly preferably $250°C \leq T3 \leq 400°C$, wherein the coating element is present in an amount of 0.1 to 2 mol%, and preferably about 1 mol%, based on the agglomerated particles.

25. The method according to any one of claims 16 to 24, wherein, prior to Step iv), the single crystal particles are mixed with a coating precursor comprising at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, and then a secondary sintering is performed at the sintering temperature T4 in a sintering atmosphere of air or oxygen, preferably oxygen, to obtain secondarily sintered single crystal particles, wherein $300°C \leq T4 \leq 900°C$, preferably $460°C \leq T4 \leq 800°C$, more preferably $550°C \leq T4 \leq 750°C$, and particularly preferably $600°C \leq T4 \leq 750°C$, wherein the coating element is present in an amount of 0.1 to 2 mol%, preferably about 1 mol%, based on the single crystal particles.

26. The method according to any one of claims 16 to 25, wherein prior to Step iv), the agglomerated particles are mixed with a coating precursor comprising at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, and then a secondary sintering is performed at the sintering temperature T3 in a sintering atmosphere of air or oxygen, preferably oxygen, to obtain secondarily sintered agglomerated particles, wherein $250°C \leq T3 \leq 800°C$, preferably $250°C \leq T3 \leq 600°C$, more preferably $250°C \leq T3 \leq 480°C$, and particularly preferably $250°C \leq T3 \leq 450°C$; and in addition, the single crystal particles are mixed with a coating precursor comprising at least one coating element selected from the group consisting of: B, F, Mg, Al, Si, P, Ca, Ti, V, Cr, Fe, Ga, Sr, Y, Zr, Nb, Mo, Sn, Ba, La, Ce, and W, and then a secondary sintering is performed at the sintering temperature T4 in a sintering atmosphere of air or oxygen, preferably oxygen, to obtain secondarily sintered single crystal particles, wherein $250°C \leq T4 \leq 900°C$, preferably $250°C \leq T4 \leq 750°C$, more preferably $250°C \leq T4 \leq 700°C$, and particularly preferably $300°C \leq T4 \leq 700°C$, the coating element is present in an amount of 0.1 to 2 mol%, and preferably about 1 mol%, based on the agglomerated particles and the single crystal particles respectively.

27. The method according to claim 26, wherein the coating element contained in the coating precursor of the agglomerated particles is different from the coating element contained in the coating precursor of the single crystal particles.

28. A lithium secondary battery comprising the cathode active material according to any one of claims 1 to 13 or the cathode active material prepared by the method according to any one of claims 16 to 27.

**Fig. 1**

**Fig. 2**

**Fig. 3**

**Fig. 4**

25°C , 1C/1C@3.0V-4.3V

**Fig. 5**

45°C , 1C/1C@3.0V-4.3V

## INTERNATIONAL SEARCH REPORT

| International application No. |
|---|
| **PCT/CN2022/109897** |

**A. CLASSIFICATION OF SUBJECT MATTER**

H01M4/525(2010.01)i;H01M4/36(2006.01)i;H01M10/0525(2010.01)i

According to International Patent Classification (IPC) or to both national classification and IPC

**B. FIELDS SEARCHED**

Minimum documentation searched (classification system followed by classification symbols)
IPC: H01M

Documentation searched other than minimum documentation to the extent that such documents are included in the fields searched

Electronic data base consulted during the international search (name of data base and, where practicable, search terms used)
CNABS; CNTXT; VEN; WOTXT; USTXT; EPTXT; CNKI: 电池, 正极, 阴极, 镍, 单晶, 多晶, 混合, battery, positive electrode, cathode, nickel, monocrystalline, polycrystalline, mix

**C. DOCUMENTS CONSIDERED TO BE RELEVANT**

| Category* | Citation of document, with indication, where appropriate, of the relevant passages | Relevant to claim No. |
|---|---|---|
| X | CN 112151794 A (ZHUHAI COSMX BATTERY CO., LTD.) 29 December 2020 (2020-12-29) description, paragraphs 5-71 | 1-28 |
| X | CN 110380034 A (HEFEI GUOXUAN HIGH-TECH POWER ENERGY CO., LTD.) 25 October 2019 (2019-10-25) description, paragraphs 4-54 | 1-28 |
| X | CN 111384372 A (NINGDE CONTEMPORARY AMPEREX TECHNOLOGY CO., LTD.) 07 July 2020 (2020-07-07) description, paragraphs 4-97, 106-107, and 169-177 | 1-28 |
| X | CN 112151793 A (ZHUHAI COSMX BATTERY CO., LTD.) 29 December 2020 (2020-12-29) description, paragraphs 5-91 | 1-28 |
| A | US 2022077450 A1 (SAMSUNG SDI CO., LTD.) 10 March 2022 (2022-03-10) entire document | 1-28 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 April 2023** | **23 April 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/109897**

| Patent document cited in search report | | | Publication date (day/month/year) | Patent family member(s) | | | Publication date (day/month/year) |
|---|---|---|---|---|---|---|---|
| CN | 112151794 | A | 29 December 2020 | None | | | |
| CN | 110380034 | A | 25 October 2019 | None | | | |
| CN | 111384372 | A | 07 July 2020 | WO | 2020134781 | A1 | 02 July 2020 |
| | | | | EP | 3800710 | A1 | 07 April 2021 |
| | | | | EP | 3800710 | B1 | 15 February 2023 |
| | | | | US | 2021126242 | A1 | 29 April 2021 |
| | | | | US | 11177468 | B2 | 16 November 2021 |
| | | | | CN | 111384372 | B | 23 March 2021 |
| CN | 112151793 | A | 29 December 2020 | None | | | |
| US | 2022077450 | A1 | 10 March 2022 | EP | 4095949 | A1 | 30 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109962221 B

- CN 107154491 B